# FASCICULE DE BREVET EUROPEEN

(11) **EP 4 206 827 B1**
(45) Date de publication et mention de la délivrance du brevet: **28.01.2026**
(21) Numéro de dépôt: 21218283.6
(22) Date de dépôt: 30.12.2021
(51) Int. Cl.: G04B 37/02, F16K 17/02, G04B 37/08, G04B 37/10

(54) **SOUPAPE DE SECURITE POUR MONTRE**
SICHERHEITSVENTIL FÜR ARMBANDUHR
SAFETY VALVE FOR A WATCH

(43) Date de publication de la demande: 05.07.2023
(73) Titulaire: Meco S.A., 2540 Grenchen (CH)
(72) Inventeur: THIRY, Rémy, 25140 Charquemont (FR); GEISER, Samuel, 2502 Bienne (CH); AVRIL, Hervé, 2540 Grenchen (CH)
(74) Mandataire: ICB SA

(56) Documents cités:
- EP-A1- 1 586 960
- EP-A1- 3 428 740
- EP-A1- 3 483 669
- EP-B1- 0 884 657
- EP-B1- 2 915 012
- US-A1- 2021 382 438

## Description

### Domaine technique de l'invention

La présente invention se rapporte à une soupape de sécurité pour une boîte de montre équipant une montre destinée à la plongée sous-marine. La présente invention se rapporte également à la montre munie de ladite soupape.

### Arrière-plan technologique

Les soupapes à hélium, aussi appelées valves à hélium, sont présentes sur certaines montres de plongée pour évacuer l'hélium infiltré dans la boîte de montre lors de plongées dites à saturation où les plongeurs respirent un mélange gazeux contenant de l'hélium et de l'oxygène. Cela leur permet de rester plusieurs jours à l'intérieur d'une cloche ou d'une station sous-marine. Durant ce laps de temps, l'hélium peut s'infiltrer dans la montre. En l'absence d'une telle soupape, la surpression intérieure générée par l'hélium infiltré peut lors de la phase de décompression générer des dégâts à la montre, comme par exemple la perte du verre qui se déchasse ou se brise.

Dans l'état de la technique, on connaît les soupapes à hélium manuelles qui fonctionnent simplement en serrant/desserrant un élément d'étanchéité comme une tête de soupape, à la façon d'une couronne vissée sur un tube chassé ou vissé sur la carrure. De telles soupapes comprennent classiquement un piston relié à la tête de soupape qui est apte à exercer une pression sur un joint d'étanchéité en coopérant avec un ressort afin de réguler la pression à l'intérieur du boitier de montre. Une telle soupape comporte, une tête évidée vissée sur le tube et au moins un joint assurant l'étanchéité à l'eau de la soupape tout en permettant, lorsqu'il n'est pas comprimé, le passage du gaz entre l'intérieur et l'extérieur de la boîte de montre en cas de surpression.

La tête est en outre généralement solidaire de différentes pièces telles que des bagues, des entretoises, des organes de contrôle de la course de la tête de soupape, etc. devant être assemblées par chassage ou soudage sur la tête pour des raisons de facilité de montage. Cet assemblage par soudage ou chassage limite le choix des matériaux et typiquement exclus des matériaux durs tels que la céramique du champ des possibles.

Le document EP 0 884 657 B1 montre une soupape de sécurité dont la tête est montée sur le tube par l'intermédiaire d'un insert, l'insert étant fixé dans la tête par emmanchement dans le logement du couvercle et coopérant avec le tube par vissage.

Il est dès lors nécessaire de développer des nouvelles soupapes avec des agencements de pièces au sein de la soupape permettant l'utilisation de ces matériaux difficiles à déformer et/ou à souder dans le domaine de l'horlogerie.

### Résumé de l'invention

L'invention a pour objet de développer une nouvelle soupape avec un agencement de pièces ne requérant pas d'assemblage par chassage ou soudage de la tête avec une autre pièce afin de pouvoir réaliser la tête de soupape dans un matériau dur tel que la céramique, le saphir, des cermets etc.

Pour ce faire, l'assemblage entre la tête et le tube ou de manière générale entre la tête et toute pièce s'effectue via un insert solidaire de la tête. Ledit insert n'étant pas visible depuis l'extérieur de la soupape, il peut être réalisé dans un matériau moins dur permettant tout type d'assemblage. Selon l'invention, la fixation entre le matériau de la tête et le matériau de l'insert est réalisée par vissage, de préférence par vissage et collage, et de manière alternative par simple collage, le pas de vis pouvant être obtenu par exemple directement par moulage de la tête avec la forme souhaitée. Ensuite, l'insert solidaire de la tête peut être fixé sur toute pièce dont le tube par chassage ou soudage ainsi que par vissage selon les conditions de montage requises.

Plus précisément, l'invention concerne une soupape de sécurité pour une boîte de montre comprenant :
- un tube destiné à être fixé à ladite boîte de montre, ledit tube définissant un axe A désignant une direction axiale,
- une tête montée mobile en rotation et en translation autour et le long dudit axe A, ladite tête pouvant adopter une première position axiale, dite position ouverte, où un écoulement de gaz peut s'effectuer entre l'intérieur et l'extérieur de la boîte de montre et une deuxième position axiale, dite position fermée, où l'écoulement de gaz entre l'intérieur et l'extérieur de la boîte de montre est empêché, ladite tête étant pourvue d'un couvercle, dit premier couvercle, et d'une jupe axiale, dite première jupe axiale, délimitant un évidement, dit premier évidement, au sein de la tête,
- un premier insert monté au sein dudit premier évidement de la tête,
ladite soupape étant montée sur le tube par l'intermédiaire du premier insert qui est solidaire en translation de la tête, et ladite tête est fixée audit premier insert par des moyens de fixation comprenant un pas de vis et/ou de la colle.

### Brève description des figures

D'autres caractéristiques et avantages de la présente invention apparaîtront à la lecture des modes de réalisation de l'invention donnés uniquement à titre d'exemple non limitatif et décrits en référence aux dessins annexés dans lesquels :
- la figure 1 est une vue en demi-coupe d'une soupape de sécurité selon l'invention en position fermée ;
- la figure 2 est une vue en coupe de cette même soupape en position ouverte en l'absence de surpression à l'intérieur de la boîte de montre ;
- la figure 3 est une vue en coupe de cette même soupape en position ouverte en présence d'une surpression à l'intérieur de la boîte de montre.

### Description détaillée de l'invention

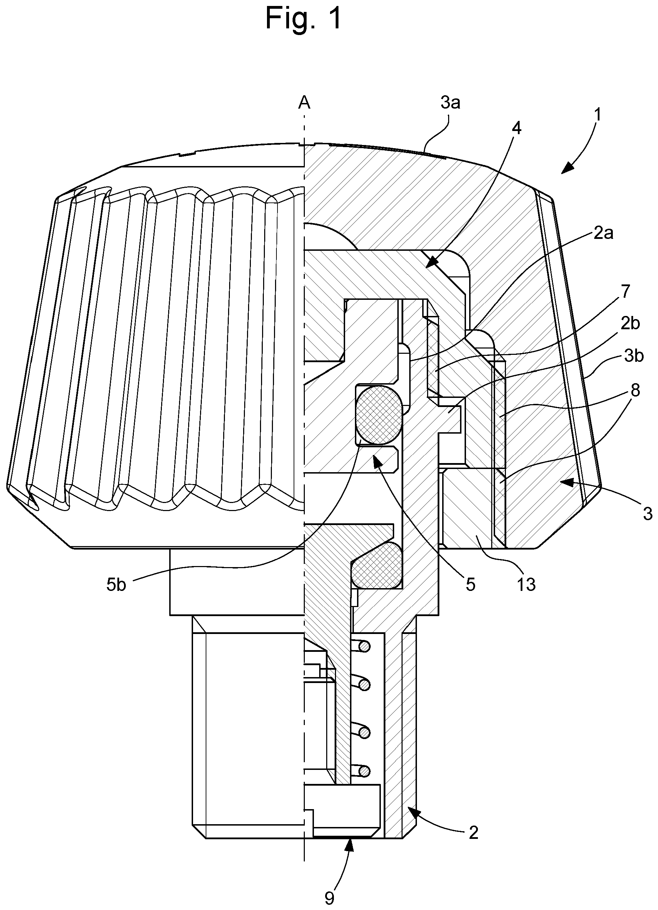

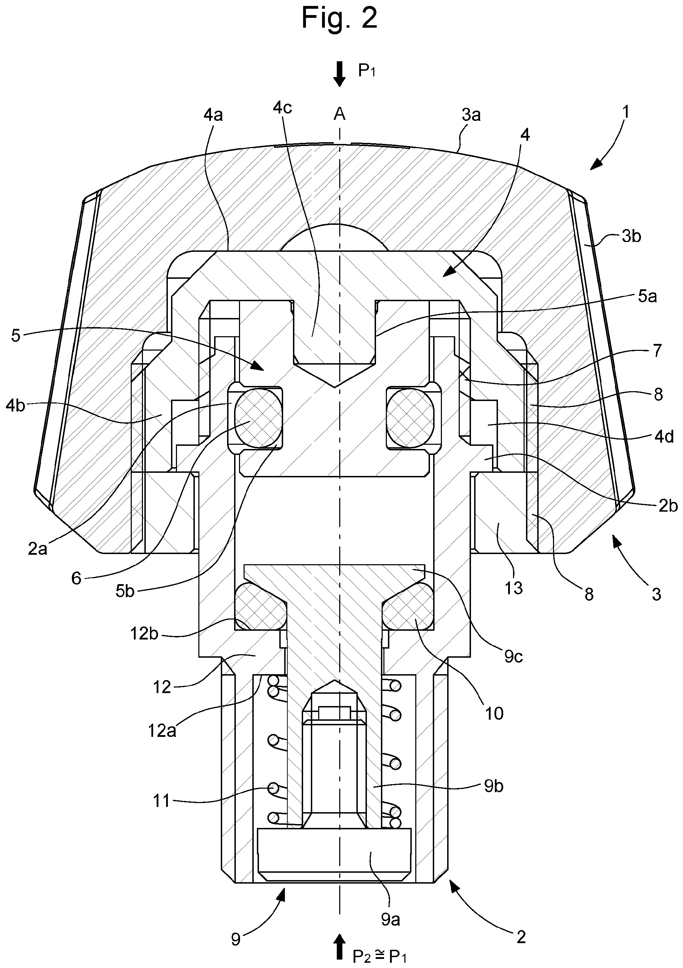

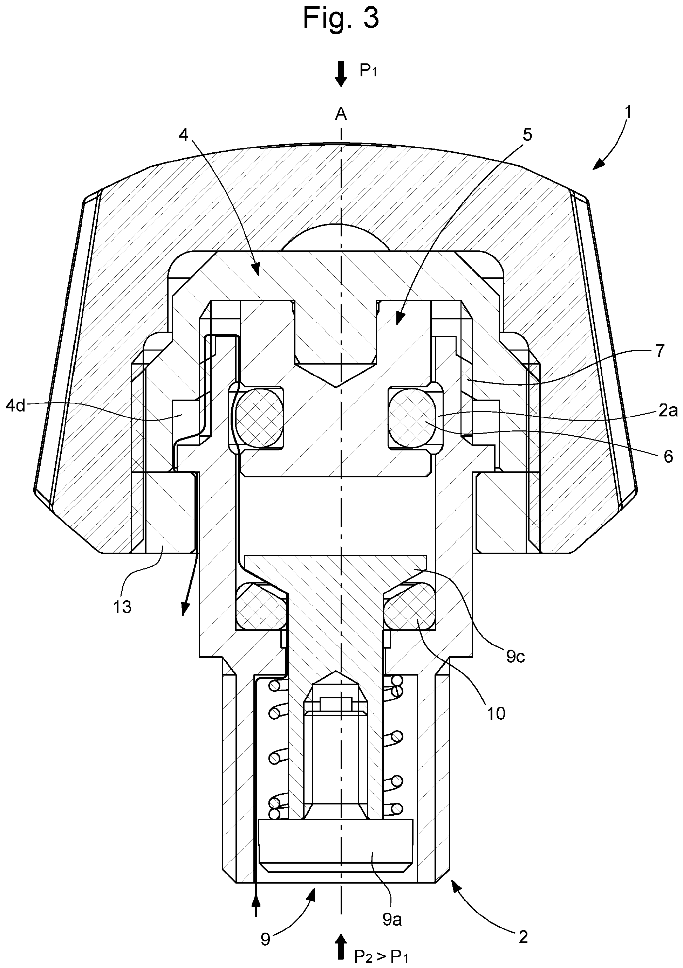

La soupape 1 selon l'invention est représentée à la figure 1 en position fermée et en position ouverte aux figures 2 et 3 avec pour cette dernière une surpression au sein de la boîte de montre. La soupape illustrée est une soupape automatique requérant une ouverture manuelle de la soupape via un dévissage de sa tête pour permettre le fonctionnement de la soupape et donc l'échappement du gaz en cas de surpression à l'intérieur de la boite de montre qu'elle équipe.

La soupape 1 comporte un tube 2 destiné à être fixé sur la boîte de montre (non représentée), une tête 3 montée mobile en rotation et en translation respectivement autour et le long de l'axe A du tube, qui est également l'axe central de la soupape. Cette tête peut être réalisée dans un matériau dur comme la céramique, du saphir, des cermets, etc. ou de manière conventionnelle dans des matériaux moins durs tels que l'acier. On entend par matériau dur, un matériau ayant une dureté Vickers supérieure à 500 HV, de préférence supérieure à 700 HV. La tête 3 est évidée avec un évidement délimité par un premier couvercle 3a prolongée par une première jupe axiale 3b présentant une symétrie de révolution autour de l'axe A. Selon l'invention, la tête 3 est solidaire d'au moins un insert 4, dit premier insert, positionné au sein de l'évidement de la tête. De préférence, ce premier insert 4 comporte également un évidement délimité par un deuxième couvercle 4a également prolongé par une deuxième jupe axiale 4b présentant une symétrie de révolution autour de l'axe A, ledit couvercle 4a étant positionné contre la face intérieure du couvercle 3a de la tête 3 (fig.2). Le couvercle 4a comporte un élément central de liaison 4c, sous forme d'un téton cylindrique dans l'exemple illustré, faisant saillie depuis la face intérieure du couvercle 4a en s'étendant dans la direction de l'axe A. Ce premier insert 4 est solidaire d'au moins un deuxième insert 5. Ce deuxième insert 5 comporte un logement 5a creusé dans la direction de l'axe A, destiné à accueillir l'élément central de liaison 4c du premier insert 4. Le deuxième insert 5 comporte dans la face extérieure de sa paroi latérale un renfoncement 5b permettant d'accueillir le premier joint d'étanchéité 6 de la soupape et destiné à coopérer avec la paroi intérieure du tube 2 en position vissée de la tête. Ce renfoncement 5b est creusé sur tout le pourtour de la paroi latérale.

La tête 3 est montée sur le tube 2 via le premier insert 4 dont une partie de la face intérieure de la jupe axiale 4b est vissée sur une partie de la face extérieure du tube 2. Ces moyens de fixation par vissage, aussi dits premiers moyens de fixation sont représentés avec la référence 7 (figures 1 et 2). Selon l'invention, l'assemblage entre la tête 3 et le premier insert 4 est réalisé par vissage, de préférence par vissage et collage, ou de manière alternative par simple collage. Une partie de la face intérieure de la jupe axiale 3b de la tête 3 est assemblée sur une partie de la face extérieure de la jupe axiale 4b du premier insert 4. Les moyens de fixation, aussi dits deuxièmes moyens de fixation, sont représentés avec la référence 8 (figures 1 et 2). L'assemblage entre le premier insert 4 et le deuxième insert 5 est réalisé via l'élément central de liaison 4c qui, de préférence, est chassé dans le logement 5a du deuxième insert 5. Dès lors, le premier insert 4 est réalisé dans un matériau acceptant une certaine déformation lors du chassage tel que l'acier. Typiquement, ce matériau a une dureté inférieure à 500 HV.

De manière classique, la soupape comporte un piston 9 qui est monté au sein du tube 2 à la suite du deuxième insert 5 dans une direction opposée à la tête. Le piston 9 monté mobile dans la direction de l'axe A comporte une base 9a surmontée d'une tige 9b qui s'évase à son extrémité opposée à la base (fig.2). La portion 9c qui s'évase définit une surface d'appui d'un deuxième joint d'étanchéité 10 de la soupape. Ce piston se déplace axialement en direction de la tête de soupape lorsqu'une pression supérieure à une pression prédéterminée est appliquée sur sa base 9a. Un ressort de rappel 11 enroulé autour de la tige 9b assure le retour en position de repos du piston 6 lorsque la pression P2 appliquée sur la base 6a est inférieure à une valeur donnée qui est fonction de la raideur du ressort. Ce ressort 11 prend appui à une extrémité sur la base 9a et à l'autre extrémité sur une portée 12 faisant saillie depuis la face intérieure du tube 2. Ladite portée 12 est définie par une face inférieure 12a tournée vers la base 9a du piston et sur laquelle le ressort 11 prend appui et par une face supérieure 12b opposée à ladite face inférieure 12a. Selon l'invention, le deuxième joint d'étanchéité 10 est positionné entre cette face supérieure 12b et la portion évasée 9c de la tige du piston 9.

Outre la portée 12 ménagée sur sa face intérieure, le tube 2 comporte une encoche 2a qui s'étend sur tout le pourtour de cette face intérieure, destinée à se positionner en regard du premier joint d'étanchéité 6 lorsque la soupape est en position ouverte comme montré aux figures 2 et 3. En position fermée (figure 1), l'encoche 2a est décalée axialement par rapport au renfoncement 5b ménagé dans le deuxième insert 5 avec éventuellement un chevauchement.

Sur sa face extérieure, le tube 2 comporte une collerette 2b qui se positionne au sein d'un évidement 4d ménagé dans la face intérieure de la jupe axiale 4b du premier insert 4. Cet évidement 4d débouche à la base de la jupe axiale 4b et est fermé par une bague 13. Cette bague 13 est disposée au sein de la partie évidée de la tête 3 à la suite du premier insert 4 en direction du piston. La bague 13 délimite avec l'évidement 4d du premier insert 4 un logement accueillant la collerette 2b. La bague forme une butée qui limite le déplacement axial de la tête lorsque cette dernière est dévissée pour ouvrir la soupape. Cette bague est assemblée sur la jupe axiale de la tête par vissage (moyens de fixation 8), de préférence par vissage et collage, ou de manière alternative par simple collage, toujours dans l'esprit d'éviter un assemblage par soudage ou chassage.

Le fonctionnement de la soupape est le suivant. L'ouverture de la soupape 1 est commandée par l'utilisateur via le dévissage de la tête 3 induisant un déplacement axial de la tête avec la collerette 2b du tube 2 venant à butée contre la bague 13 qui place la soupape dans une position de fonctionnement. Dans cette position ouverte, un espace pour le passage du gaz se libère entre le premier joint d'étanchéité 6 et l'encoche 2a ménagée dans le tube 2. En l'absence d'une surpression à l'intérieur de la boîte de montre (P1=P2 ou P2 légèrement supérieure à P1), le deuxième joint d'étanchéité 10 est comprimé contre la portée 12 du tube 2 par la portion évasée 9c du piston 9 (figure 2). La soupape est dès lors complètement étanche. En présence d'une surpression à l'intérieur de la boîte de montre (P2>P1), le piston 9 se soulève, ce qui libère le deuxième joint d'étanchéité 10 et permet le passage du gaz pour équilibrer les pressions entre l'intérieur et l'extérieur de la boîte (figure 3). Ce chemin d'écoulement du gaz est schématisé à la figure 3 par les flèches. Le passage s'effectue successivement dans l'espace entre le piston 9 et le tube 2, entre le deuxième joint d'étanchéité 10 et la portion évasée 9c du piston et puis entre l'encoche 2a du tube 2 et le premier joint d'étanchéité 6. Le passage du gaz s'effectue ensuite entre le deuxième insert 5 et le tube 2, entre l'extrémité supérieure du tube 2 et le premier insert 4, entre le premier insert 4 et le deuxième insert 5 au niveau des moyens de fixation 7, au sein de l'évidement 4d du premier insert 4 pour finalement aboutir à l'extérieur après un passage entre la bague 13 et le tube 2.

### Nomenclature

- 1.: Soupape
- 2.: Tube
a. Encoche
b. Collerette
- 3.: Tête
a. Couvercle, aussi dit premier couvercle,
b. Jupe axiale, aussi dite première jupe axiale,
- 4.: Premier insert
a. Couvercle, aussi dit deuxième couvercle,
b. Jupe axiale, aussi dite deuxième jupe axiale,
c. Elément central de liaison
d. Evidement
- 5.: Deuxième insert
a. Logement
b. Renfoncement
- 6.: Premier joint d'étanchéité
- 7.: Premiers moyens de fixation
- 8.: Deuxièmes moyens de fixation
- 9.: Piston
a. Base
b. Tige
c. Portion évasée
- 10.: Deuxième joint d'étanchéité
- 11.: Ressort
- 12.: Portée du tube
a. Face inférieure
b. Face supérieure
- 13.: Bague

## Revendications

1. Soupape de sécurité (1) pour une boîte de montre comprenant :
- un tube (2) destiné à être fixé à ladite boîte de montre, ledit tube (2) définissant un axe A désignant une direction axiale,
- une tête (3) montée mobile en rotation et en translation autour et le long dudit axe A, ladite tête (3) pouvant adopter une première position axiale, dite position ouverte, où un écoulement de gaz peut s'effectuer entre l'intérieur et l'extérieur de la boîte de montre et une deuxième position axiale, dite position fermée, où l'écoulement de gaz entre l'intérieur et l'extérieur de la boîte de montre est empêché, ladite tête (3) étant pourvue d'un couvercle (3a), dit premier couvercle, et d'une jupe axiale (3b), dite première jupe axiale, délimitant un évidement, dit premier évidement, au sein de la tête (3),
- un premier insert (4) monté au sein dudit premier évidement de la tête (3),
ladite soupape (1) étant montée sur le tube (2) par l'intermédiaire du premier insert (4) qui est solidaire en translation de la tête, ladite soupape étant **caractérisée en ce que** la tête (3) est fixée audit premier insert (4) par des moyens de fixation (8) comprenant un pas de vis et/ou une colle.

2. Soupape de sécurité (1) selon la revendication 1, **caractérisée en ce que** le premier insert (4) est évidée et comporte au sein de son évidement, dit deuxième évidement, un deuxième insert (5).

3. Soupape de sécurité (1) selon la revendication précédente, **caractérisée en ce que** le premier insert (4) est pourvu d'un couvercle (4a), dit deuxième couvercle, et d'une jupe axiale (4b), dite deuxième jupe axiale, délimitant le deuxième évidement, ledit deuxième couvercle (4a) étant positionné contre la face intérieure du premier couvercle (3a) de la tête (3).

4. Soupape de sécurité (1) selon la revendication précédente, **caractérisée en ce que** le deuxième couvercle (4a) du premier insert (4) comporte un élément central de liaison (4c) faisant saillie depuis la face intérieure du deuxième couvercle (4a) selon la direction axiale et **en ce que** le deuxième insert (5) comporte un logement (5a) accueillant l'élément central de liaison (4c).

5. Soupape de sécurité (1) selon l'une des revendications 2 à 4, **caractérisée en ce qu'**elle comporte un premier joint d'étanchéité (6) et **en ce que** le deuxième insert (5) comporte dans la face extérieure de sa paroi latérale un renfoncement (5b) accueillant ledit premier joint d'étanchéité (6).

6. Soupape de sécurité (1) selon la revendication précédente, **caractérisée en ce que** le tube (2) comporte sur sa face intérieure une encoche (2a) se positionnant en regard du renfoncement (5b) lorsque la soupape (1) est en position ouverte et se positionnant avec un décalage axial lorsque la soupape (1) est en position fermée.

7. Soupape de sécurité (1) selon l'une des revendications précédentes, **caractérisée en ce qu'**elle comporte un deuxième joint d'étanchéité (10), **en ce que** le tube (2) comporte sur sa face intérieure une portée (12) sur laquelle le deuxième joint d'étanchéité (10) repose et **en ce qu'**elle comporte un piston (9) monté mobile axialement au sein du tube (2), ledit piston (9) comportant une portion évasée (9c) comprimant ledit deuxième joint d'étanchéité (10) contre la portée (12) lorsque la soupape (1) est en position fermée et libérant ledit deuxième joint d'étanchéité (10) lorsque la soupape (1) est en position ouverte.

8. Soupape de sécurité (1) selon l'une des revendications précédentes, **caractérisée en ce qu'**elle comporte une bague (13) au sein du premier évidement de la tête (3) à la suite et accolée au premier insert (4), ladite bague (13) étant fixée à la tête (3) avec lesdits moyens de fixation (8) comprenant le pas de vis et/ou la colle.

9. Soupape de sécurité (1) selon la revendication précédente, lorsqu'elle dépend de la revendication 3, **caractérisée en ce qu'**un évidement (4d), dit troisième évidement, est ménagé dans la face intérieure de la deuxième jupe axiale (4b) du premier insert (4), ledit troisième évidement débouchant sur la bague (13), et **en ce que** le tube (2) comporte sur sa face extérieure une collerette (2b) qui se positionne au sein dudit troisième évidement (4d), ladite bague (13) formant une butée qui limite le déplacement axial de la tête (3) lorsqu'elle passe de la position fermée à la position ouverte.

10. Soupape de sécurité (1) selon l'une des revendications précédentes, **caractérisée en ce que** la tête (3) est réalisée dans un matériau ayant une dureté Vickers supérieure à 500 HV, de préférence supérieure à 700 HV, tel qu'un matériau céramique, du saphir ou des cermets.

11. Soupape de sécurité (1) selon l'une des revendications précédentes, **caractérisée en ce que** le premier insert (4) est réalisé dans un matériau ayant une dureté inférieure à 500 HV.

12. Soupape de sécurité (1) selon l'une des revendications précédentes, **caractérisée en ce que** la tête (3) ne comporte pas de moyens de fixation par chassage ou soudage.

13. Montre comprenant la soupape de sécurité (1) selon l'une des revendications précédentes.

## Patentansprüche

1. Sicherheitsventil (1) für ein Uhrengehäuse, umfassend:
- ein Rohr (2), das zur Befestigung an dem genannten Uhrengehäuse bestimmt ist, wobei dieses Rohr (2) eine Achse A definiert, die die Axialrichtung angibt,
- einen Kopf (3), der um und entlang der genannten Achse A dreh- und längsverschieblich gelagert ist, wobei der Kopf (3) eine erste axiale Stellung, die sogenannte Offenstellung, einnehmen kann, in der der Gasdurchtritt zwischen dem Inneren und dem Äußeren des Uhrengehäuses erfolgen kann, und eine zweite axiale Stellung, die sogenannte Schließstellung, in der der Gasdurchtritt zwischen dem Inneren und dem Äußeren des Uhrengehäuses unterbunden ist, wobei der Kopf (3) mit einem Deckel (3a), genannt erster Deckel , und mit einer axialen Schürze (3b), genannt erste axiale Schürze, versehen ist, die zusammen eine Ausnehmung, genannt erste Ausnehmung, innerhalb des Kopfes (3) begrenzen,
- eine erste Einlage (4), die in der genannten ersten Ausnehmung des Kopfes (3) montiert ist,
Sicherheitsventil (1), das über die erste Einlage (4), die mit dem Kopf in Translationsrichtung fest verbunden ist, auf dem Rohr (2) montiert ist, wobei das Sicherheitsventil **dadurch gekennzeichnet ist, dass** der Kopf (3) an der genannten ersten Einlage (4) mittels Befestigungsmitteln (8), die ein Gewinde und/oder einen Klebstoff umfassen, befestigt ist.

2. Sicherheitsventil (1) nach Anspruch 1, **dadurch gekennzeichnet, dass** die erste Einlage (4) mit einer Ausnehmung versehen ist und innerhalb dieser Ausnehmung, genannt zweite Ausnehmung, eine zweite Einlage (5) aufweist.

3. Sicherheitsventil (1) nach dem vorhergehenden Anspruch, **dadurch gekennzeichnet, dass** die erste Einlage (4) mit einem Deckel (4a), genannt zweiter Deckel, und mit einer axialen Schürze (4b), genannt zweite axiale Schürze, versehen ist, die zusammen die zweite Ausnehmung begrenzen, wobei der zweite Deckel (4a) an der Innenseite des ersten Deckels (3a) des Kopfes (3) anliegt.

4. Sicherheitsventil (1) nach dem vorhergehenden Anspruch, **dadurch gekennzeichnet, dass** der zweite Deckel (4a) der ersten Einlage (4) ein zentrales Verbindungselement (4c) aufweist, das von der Innenseite des zweiten Deckels (4a) in axialer Richtung vorspringt, und dass die zweite Einlage (5) eine Aufnahme (5a) aufweist, die das zentrale Verbindungselement (4c) aufnimmt.

5. Sicherheitsventil (1) nach einem der Ansprüche 2 bis 4, **dadurch gekennzeichnet, dass** es eine erste Dichtung (6) aufweist und dass die zweite Einlage (5) auf der Außenseite ihrer Seitenwand eine Vertiefung (5b) aufweist, die die genannte erste Dichtung (6) aufnimmt.

6. Sicherheitsventil (1) nach dem vorhergehenden Anspruch, **dadurch gekennzeichnet, dass** das Rohr (2) auf seiner Innenseite eine Kerbe (2a) aufweist, die der Vertiefung (5b) gegenüberliegt, wenn das Ventil (1) in der Offenstellung ist, und die axial versetzt angeordnet ist, wenn das Ventil (1) in der Schließstellung ist.

7. Sicherheitsventil (1) nach einem der vorhergehenden Ansprüche, **dadurch gekennzeichnet, dass** es eine zweite Dichtung (10) aufweist, dass das Rohr (2) auf seiner Innenseite einen Sitz (12) aufweist, auf dem die zweite Dichtung (10) aufliegt, und dass es einen axial verschiebbar im Rohr (2) gelagerten Kolben (9) aufweist, wobei der genannte Kolben (9) einen aufgeweiteten Abschnitt (9c) aufweist, der die genannte zweite Dichtung (10) gegen den Sitz (12) zusammendrückt, wenn das Ventil (1) in der Schließstellung ist, und die genannte zweite Dichtung (10) freigibt, wenn das Ventil (1) in der Offenstellung ist.

8. Sicherheitsventil (1) nach einem der vorhergehenden Ansprüche, **dadurch gekennzeichnet, dass** es einen Ring (13) innerhalb der ersten Ausnehmung des Kopfes (3) aufweist, der der ersten Einlage (4) nachfolgt und an diese angrenzt, wobei der genannte Ring (13) am Kopf (3) mittels der genannten Befestigungsmittel (8), die ein Gewinde und/oder einen Klebstoff umfassen, befestigt ist.

9. Sicherheitsventil (1) nach dem vorhergehenden Anspruch, sofern es von Anspruch 3 abhängt, **dadurch gekennzeichnet, dass** eine Ausnehmung (4d), genannt dritte Ausnehmung, in der Innenfläche der zweiten axialen Schürze (4b) der ersten Einlage (4) ausgebildet ist, wobei die genannte dritte Ausnehmung zum Ring (13) hin mündet, und dass das Rohr (2) auf seiner Außenseite einen Kragen (2b) aufweist, der sich innerhalb der genannten dritten Ausnehmung (4d) positioniert, wobei der genannte Ring (13) einen Anschlag bildet, der die axiale Bewegung des Kopfes (3) begrenzt, wenn der Kopf von der Schließstellung in die Offenstellung übergeht.

10. Sicherheitsventil (1) nach einem der vorhergehenden Ansprüche, **dadurch gekennzeichnet, dass** der Kopf (3) aus einem Werkstoff mit einer Vickers-Härte von mehr als 500 HV, vorzugsweise von mehr als 700 HV, hergestellt ist, wie beispielsweise einem keramischen Werkstoff, Saphir oder Cermets.

11. Sicherheitsventil (1) nach einem der vorhergehenden Ansprüche, **dadurch gekennzeichnet, dass** die erste Einlage (4) aus einem Werkstoff mit einer Vickers-Härte unter 500 HV gefertigt ist.

12. Sicherheitsventil (1) nach einem der vorhergehenden Ansprüche, **dadurch gekennzeichnet, dass** der Kopf (3) keine Mittel zur Befestigung durch Einpressen oder Schweißen aufweist.

13. Uhr, umfassend das Sicherheitsventil (1) nach einem der vorhergehenden Ansprüche.

## Claims

1. A pressure-relief valve (1) for a watch case comprising:
- a tube (2) intended to be fastened to said watch case, said tube (2) defining an axis A designating an axial direction,
- a head (3) mounted movable in rotation and in translation about and along said axis A, said head (3) being able to adopt a first axial position, called open position, where a gas flow could be performed between the inside and the outside of the watch case and a second axial position, called closed position, where the gas flow between the inside and the outside of the watch case is prevented, said head (3) being provided with a cover (3a), called first cover, and with an axial skirt (3b), called first axial skirt, delimiting a recess, called first recess, within the head (3),
- a first insert (4) mounted within said first recess of the head (3),
said valve (1) being mounted on the tube (2) via the first insert (4) which is integral in translation with the head said valve being **characterised in that** the head (3) is fastened to said first insert (4) by fastening means (8) comprising a screw thread and/or a glue.

2. The pressure-relief valve (1) according to claim 1, **characterised in that** the first insert (4) is recessed and includes within its recess, called second recess, a second insert (5).

3. The pressure-relief valve (1) according to the preceding claim, **characterised in that** the first insert (4) is provided with a cover (4a), called second cover, and with an axial skirt (4b), called second axial skirt, delimiting the second recess, said second cover (4a) being positioned against the internal face of the first cover (3a) of the head (3).

4. The pressure-relief valve (1) according to the preceding claim, **characterised in that** the second cover (4a) of the first insert (4) includes a central connecting element (4c) projecting from the internal face of the second cover (4a) according to the axial direction and **in that** the second insert (5) includes a housing (5a) accommodating the central connecting element (4c).

5. The pressure-relief valve (1) according to one of claims 2 to 4, **characterised in that** it includes a first sealing gasket (6) and **in that** the second insert (5) includes in the external face of its lateral wall an indentation (5b) accommodating said first sealing gasket (6).

6. The pressure-relief valve (1) according to the preceding claim, **characterised in that** the tube (2) includes over its internal face a notch (2a) positioned opposite the indentation (5b) when the valve (1) is in the open position and positioned with an axial offset when the valve (1) is in the closed position.

7. The pressure-relief valve (1) according to one of the preceding claims, **characterised in that** it includes a second sealing gasket (10), **in that** the tube (2) includes over its internal face a shoulder (12) on which the second sealing gasket (10) rests and **in that** it includes a plunger (9) mounted movable axially within the tube (2), said plunger (9) including a flared portion (9c) compressing said second sealing gasket (10) against the shoulder (12) when the valve (1) is in the closed position and releasing said second sealing gasket (10) when the valve (1) is in the open position.

8. The pressure-relief valve (1) according to one of the preceding claims, **characterised in that** it includes a ring (13) within the first recess of the head (3) next and contiguous to the first insert (4), said ring (13) being fastened to the head (3) with said fastening means (8) comprising the screw thread and/or the glue.

9. The pressure-relief valve (1) according to the preceding claim, when it depends to claim 3, **characterised in that** a recess (4d), called third recess, is formed in the internal face of the second axial skirt (4b) of the first insert (4), said third recess opening onto the ring (13), and **in that** the tube (2) includes on its external face a collar (2b) which is positioned within said third recess (4d), said ring (13) forming a banking which limits the axial movement of the head (3) when it passes from the closed position to the open position.

10. The pressure-relief valve (1) according to one of the preceding claims, **characterised in that** the head (3) is made of a material having a Vickers hardness higher than 500 HV, preferably higher than 700 HV, such as a ceramic material, sapphire or ceramels.

11. The pressure-relief valve (1) according to one of the preceding claims, **characterised in that** the first insert (4) is made of a material having a hardness lower than 500 HV.

12. The pressure-relief valve (1) according to one of the preceding claims, **characterised in that** the head (3) does not include means for fastening by fitting or welding.

13. A watch comprising the pressure-relief valve (1) according to one of the preceding claims.
